# EUROPEAN PATENT APPLICATION

(11) **EP 4 597 693 A1**
(43) Date of publication of application: **06.08.2025**
(21) Application number: 23869397.2
(22) Date of filing: 10.01.2023
(51) Int. Cl.: H01M 50/10, H01M 50/342

(54) **CELL BATTERY, BATTERY PACK, AND ELECTRICAL DEVICE**

(30) Priority: 28.09.2022 CN 202222583311 U; 03.11.2022 CN 202222964548 U
(71) Applicant: Xiamen Hithium Energy Storage Technology Co., Ltd., Xiamen, Fujian 361100 (CN)
(72) Inventor: XU, Weidong, Xiamen, Fujian 361100 (CN)
(74) Representative: Manitz Finsterwald Patent- und Rechtsanwaltspartnerschaft mbB
(86) International application number: PCT/CN2023/071607
(87) International publication number: WO 2024/066133

(57) **Abstract**

Provided are a cell battery (100), a battery pack, and an electricity-consumption device. The cell battery includes: a housing (10); a first end cover (100a) provided at an end of the housing (10), the first end cover (100a) including a first base cover (1a) and a first explosion-proof valve (20) mounted at the first base cover (1a); and a second end cover (100b) provided at the other end of the housing (10), the second end cover (100b) including a second base cover (1b) and a second explosion-proof valve (30) mounted at the second base cover (1b).

## Description

### CROSS-REFERENCE TO RELATED APPLICATIONS

This application claims priority to Chinese patent applications Nos.202222964548.0 and 202222583311.8, filed by XIAMEN HITHIUM ENERGY STORAGE TECHNOLOGY CO., LTD. on November 03, 2022 and September 28, 2022, the entire contents of which are incorporated herein by reference.

### FIELD

The present invention relates to the field of battery technologies, and more particularly, to a cell battery, a battery pack, and an electricity-consumption device.

### BACKGROUND

In the related art, a cell battery has poor pressure relief performance. Pressure relief cannot be completed in time when the cell battery has a high pressure, resulting in a risk of thermal runaway.

### SUMMARY

The present invention aims to solve at least one of the technical problems in the related art. To this end, embodiments of the present invention are to provide a cell battery, which can satisfy high pressure relief requirements.

Embodiments of the present invention are also to provide a battery pack including the above cell battery.

Embodiments of the present invention are also to provide an electricity-consumption device including the above battery pack.

According to an embodiment of the present invention, a cell battery is provided. The cell battery includes a housing, a first end cover provided at an end of the housing, and a second end cover provided at the other end of the housing. The first end cover includes a first base cover and a first explosion-proof valve mounted at the first base cover. The second end cover includes a second base cover and a second explosion-proof valve mounted at the second base cover.

With the cell battery according to the embodiment of the present invention, since the first end cover includes a first current collector disk and the second end cover includes a second current collector disk, the first explosion-proof valve and the second explosion-proof valve can perform pressure relief through two ends of the cell battery. As a result, a pressure relief capacity is improved, which can satisfy higher pressure relief requirements, thereby significantly reducing a risk of thermal runaway.

In addition, the cell battery according to the above embodiment of the present invention can further have the following additional technical features.

According to some embodiments of the present invention, the first end cover further includes a first pole and a first current collector disk. The first pole is mounted at the first base cover. The first current collector disk is located at a side of the first base cover facing towards the housing and is electrically connected to the first pole, and the first base cover has an electrolyte injection hole. The second end cover further includes a second pole and a second current collector disk. The second pole is mounted at the second base cover. The second current collector disk is located at a side of the second base cover facing towards the housing and is electrically connected to the second pole.

According to some embodiments of the present invention, a projection of the first explosion-proof valve in an axial direction of the cell battery at least partially overlaps with a projection of the second explosion-proof valve in the axial direction of the cell battery.

According to some embodiments of the present invention, the projection of the first explosion-proof valve in the axial direction of the cell battery completely overlaps with the projection of the second explosion-proof valve in the axial direction of the cell battery.

According to some embodiments of the present invention, the first base cover has a first exhaust channel and a first communication channel. The first explosion-proof valve is mounted at the first exhaust channel, and the first exhaust channel is in communication with an external environment via the first communication channel. The second base cover has a second exhaust channel and a second communication channel. The second explosion-proof valve is mounted at the second exhaust channel, and the second exhaust channel is in communication with the external environment via the second communication channel.

According to some embodiments of the present invention, the first base cover includes a first insulation cover and a first base plate provided at a side of the first insulation cover away from the housing, and the first exhaust channel has a first through-hole and a first hollowed-out region. The first base plate is provided with the first through-hole and the first communication channel. The first hollowed-out region is located at the first insulation cover. The first explosion-proof valve is mounted between the first base plate and the first insulation cover. The second base cover includes a second insulation cover and a second base plate provided at a side of the second insulation cover away from the housing, and the second exhaust channel has a second through-hole and a second hollowed-out region. The second base plate is provided with the second through-hole and the second communication channel. The second hollowed-out region is located at the second insulation cover. The second explosion-proof valve is mounted between the second base plate and the second insulation cover.

According to some embodiments of the present invention, the first end cover further includes a first protective member mounted at the first exhaust channel and located downstream of the first explosion-proof valve in an exhaust direction. The second end cover further includes a second protective member mounted at the second exhaust channel and located downstream of the second explosion-proof valve in the exhaust direction.

According to some embodiments of the present invention, the first current collector disk is located at a side of the first pole adjacent to the housing and is laser-welded to the first pole. The second current collector disk is located at a side of the second pole adjacent to the housing and is laser-welded to the second pole.

According to some embodiments of the present invention, the first current collector disk is in surface contact with the first pole. The second current collector disk is in surface contact with the second pole. A laser welding path is in a continuous annular shape.

According to some embodiments of the present invention, the first base cover is provided with a first limiting rib on a surface of the first base cover facing towards the housing, and the first limiting rib extends along an edge of the first current collector disk and is in clearance fit with the edge of the first current collector disk. The second base cover is provided with a second limiting rib on a surface of the second base cover facing towards the housing, and the second limiting rib extends along an edge of the second current collector disk and is in clearance fit with the edge of the second current collector disk.

According to some embodiments of the present invention, the first pole is provided with a first outer protrusion on a circumferential surface of an end of the first pole facing towards the first current collector disk, and the first end cover further includes a first seal. The first seal is sleeved on the first pole and abuts between the first outer protrusion and the first base cover. The second pole is provided with a second outer protrusion on a circumferential surface of an end of the second pole facing towards the second current collector disk, and the second end cover further includes a second seal. The second seal is sleeved on the second pole and abuts between the second outer protrusion and the second base cover.

According to some embodiments of the present invention, the first end cover further includes a first pressing block provided at a side of the first base cover away from the housing, and the first pole rivets the first base cover and the first pressing block together. The second end cover further includes a second pressing block provided at a side of the second base cover away from the housing, and the second pole rivets the second base cover and the second pressing block together.

According to some embodiments of the present invention, the first end cover further includes a first spacer provided between the first pressing block and the first base cover. The second end cover further includes a second spacer provided between the second pressing block and the second base cover.

According to some embodiments of the present invention, one of the first pressing block and the first spacer has a first limiting recess, and the other one of the first pressing block and the first spacer is provided with a first limiting protrusion engaged into the first limiting recess. The first limiting protrusion has a non-circular cross-section perpendicular to an axis of the first pole. One of the second pressing block and the second spacer has a second limiting recess, and the other one of the second pressing block and the second spacer is provided with a second limiting protrusion engaged into the second limiting recess. The second limiting protrusion has a non-circular cross-section perpendicular to an axis of the second pole.

According to some embodiments of the present invention, one of the first base cover and the first spacer has a third limiting recess, and the other one of the first base cover and the first spacer is provided with a third limiting protrusion engaged into the third limiting recess. The third limiting protrusion has a non-circular cross-section perpendicular to an axis of the first pole. One of the second base cover and the second spacer has a fourth limiting recess, and the other one of the second base cover and the second spacer is provided with a fourth limiting protrusion engaged into the fourth limiting recess. The fourth limiting protrusion has a non-circular cross-section perpendicular to an axis of the second pole.

According to some embodiments of the present invention, an opening pressure of the first explosion-proof valve is unequal to an opening pressure of the second explosion-proof valve.

According to some embodiments of the present invention, a difference between the opening pressure of the first explosion-proof valve and the opening pressure of the second explosion-proof valve is greater than or equal to 0.1 MPa.

According to some embodiments of the present invention, the first explosion-proof valve includes a first body, and the first body has a first groove. The second explosion-proof valve includes a second body, and the second body has a second groove.

According to some embodiments of the present invention, the first groove has a depth unequal to a depth of the second groove.

According to some embodiments of the present invention, the first body and the second body are each made of an aluminum sheet. A difference between the depth of the first groove and the depth of the second groove is greater than or equal to 90 micrometers.

According to some embodiments of the present invention, the first groove extends along a part of an edge of the first body. The second groove extends along a part of an edge of the second body. An area of the first body is unequal to an area of the second body.

According to some embodiments of the present invention, the first body includes a first connection segment. Two ends of the first connection segment are connected to two ends of the first groove, respectively, and a first opening region is enclosed by the first connection segment and the first groove. The second body includes a second connection segment. Two ends of the second connection segment are connected to two ends of the second groove, respectively, and a second opening region is enclosed by the second connection segment and the second groove.

According to some embodiments of the present invention, at least one of the first body and the second body is provided with a connection portion at an edge of the at least one of the first body and the second body. When the first explosion-proof valve is provided with the connection portion, the connection portion is in an annular shape and extends along an edge of the first body, the first body has a smaller thickness than the connection portion, and the first groove is formed at a connection between the first body and the connection portion. When the second explosion-proof valve is provided with the connection portion, the connection portion is in an annular shape and extends along an edge of the second body, the second body has a smaller thickness than the connection portion, and the second groove is formed at a connection between the second body and the connection portion.

According to some embodiments of the present invention, the second base cover has a first engagement groove, and the second explosion-proof valve is connected at the first engagement groove.

According to some embodiments of the present invention, the first base cover has a third groove extending in an arc shape, and the first explosion-proof valve is formed by the third groove and a region enclosed by the third groove.

According to some embodiments of the present invention, the second explosion-proof valve is connected at the first engagement groove through welding.

According to some embodiments of the present invention, the cell battery is a cylindrical battery. The housing is in a cylindrical shape. The first end cover and the second end cover are arranged at two axial ends of the housing, respectively.

According to embodiments of the present invention, a battery pack is provided. The battery pack includes the cell battery according to any one of the above embodiments.

According to embodiments of the present invention, an electricity-consumption device is provided. The electricity-consumption device includes the battery pack according to the above embodiments.

Additional aspects and advantages of the present invention will be provided at least in part in the following description, or will become apparent at least in part from the following description, or can be learned from practicing of the present invention.

### BRIEF DESCRIPTION OF THE DRAWINGS

The above and/or additional aspects and advantages of the present invention will become more apparent and more understandable from the following description of embodiments taken in conjunction with the accompanying drawings.
FIG. 1 is a schematic structural view of a first end cover according to an embodiment of the present invention.
FIG. 2 is a top view of the first end cover in FIG. 1.
FIG. 3 is a cross-sectional view taken along line A-A in FIG. 2.
FIG. 4 is an enlarged schematic structural view of part B indicated in FIG. 3.
FIG. 5 is an exploded view of FIG. 1.
FIG. 6 is a bottom view of the first end cover in FIG. 1.
FIG. 7 is a schematic structural view of a first pressing block and a first spacer (or a second pressing block and a second spacer) in FIG. 1.
FIG. 8 is a schematic structural view of a second end cover according to an embodiment of the present invention.
FIG. 9 is a top view of the first end cover shown in FIG. 8.
FIG. 10 is a cross-sectional view taken along line C-C in FIG. 9.
FIG. 11 is an enlarged schematic structural view of part D indicated in FIG. 10.
FIG. 12 is a perspective view of a cell battery according to a first aspect embodiment of the present invention.
FIG. 13 is a cross-sectional view of a cell battery according to a first aspect embodiment of the present invention.
FIG. 14 is an enlarged partial view of part E in FIG. 13.
FIG. 15 is an enlarged partial view of part F in FIG. 13.
FIG. 16 is a perspective view of a first explosion-proof valve of a cell battery according to a first embodiment of the present invention.
FIG. 17 is a perspective view of a second explosion-proof valve of a cell battery according to a first embodiment of the present invention.
FIG. 18 is a perspective view of a side of a cell battery according to a second embodiment of the present invention.
FIG. 19 is a perspective view of another side of a cell battery according to a second embodiment of the present invention.

Reference numerals of the accompanying drawings:
first end cover 100a; second end cover 100b;
first base cover 1a; second base cover 1b; first base plate 10a; second base plate 10b; first exhaust channel 101a; second exhaust channel 101b; first through-hole 102a; second through-hole 102b; first communication channel 103a; second communication channel 103b; third limiting recess 104a; fourth limiting recess 104b; electrolyte injection hole 105;
first pole 20a; second pole 20b; first outer protrusion 21a; second outer protrusion 21b;
first current collector disk 30a; second current collector disk 30b;
first seal 40a; second seal 40b;
first insulation cover 51a; second insulation cover 51b; first limiting rib 511a; second limiting rib 511b; first hollowed-out region 512a; second hollowed-out region 512b;
first spacer 52a; second spacer 52b; first limiting recess 521a; second limiting recess 521b; third limiting protrusion 522a; fourth limiting protrusion 522b;
first explosion-proof valve 20; second explosion-proof valve 30;
first protective member 61a; second protective member 61b;
first pressing block 70a; second pressing block 70b; first limiting protrusion 71a; second limiting protrusion 71b;
cell battery 100;
housing 10; first engagement groove 11; second engagement groove 13;
first body 21; first groove 211; first connection segment 212; first opening region 213; third groove 214; connection portion 22;
second body 31; second groove 311; second connection segment 312; second opening region 313.

### DETAILED DESCRIPTION

Embodiments of the present invention will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the embodiments of the present invention.

In the description of the present invention, it should be understood that, the orientation or the position indicated by terms such as "center," "longitudinal," "lateral," "length," "width," "thickness," "over," "below," "front," "rear," "left," "right," "vertical," "horizontal," "top," "bottom," "inner," "outer," "clockwise," "anti-clockwise," "axial," "radial," and "circumferential" should be construed to refer to the orientation and the position as shown in the drawings, and is only for the convenience of describing the present invention and simplifying the description, rather than indicating or implying that the pointed device or element must have a specific orientation, or be constructed and operated in a specific orientation, and therefore cannot be understood as a limitation of the present invention.

In the description of the present invention, "the first feature" and "the second feature" may include one or more of these features. "Plurality" means two or more. The first feature "on" or "under" the second feature may mean that the first feature is in direct contact with the second feature, or the first and second features are in indirect contact through another feature between the first and second features. The first feature "above" the second feature means that the first feature is directly above or obliquely above the second feature, or simply means that the level of the first feature is higher than that of the second feature.

In the related art, a cell battery has poor pressure relief performance. Pressure relief cannot be completed in time when the cell battery has a high internal pressure, resulting in a risk of thermal runaway. For example, when the cell battery has a large height, a demand for pressure relief becomes more stringent. However, a structure of the cell battery in the related art restricts the height of the cell battery from being increased, which impacts applicability of the cell battery.

Therefore, embodiments of the present invention provide a cell battery, which can realize rapid pressure relief, and release pressure through two ends of the cell battery, and thus can satisfy high pressure relief requirements, thereby effectively reducing the risk of thermal runaway. Further, the height of the cell battery is not restricted by the pressure relief, which facilitates flexible design of the cell battery in size as desired. For example, pressure relief requirements of the cell battery with a height greater than 140 mm can be satisfied.

A cell battery 100 according to the embodiments of the present invention is described below with reference to the accompanying drawings.

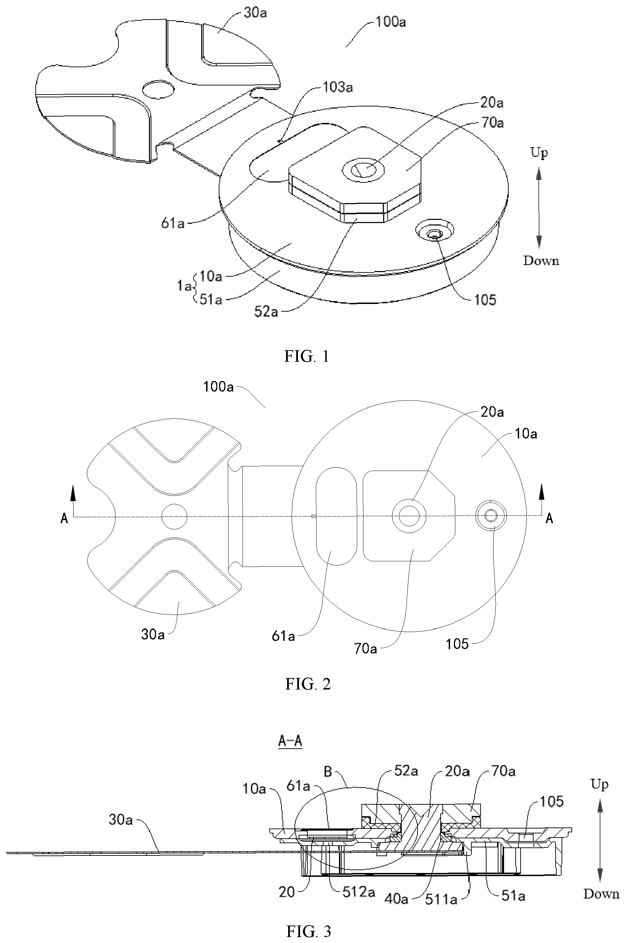

As illustrated in FIG. 1 to FIG. 15, the cell battery 100 according to the embodiments of the present invention may include a housing 10, a first end cover 100a, and a second end cover 100b.

The first end cover 100a is provided at an end of the housing 10, and the second end cover 100b is provided at the other end of the housing 10, in such a manner that the first end cover 100a, the second end cover 100b, and the housing 10 cooperate to define a mounting cavity. The mounting cavity is configured for mounting of a cell to provide protection for the cell.

The first end cover 100a includes a first base cover 1a and a first explosion-proof valve 20 mounted at the first base cover 1a.

The second end cover 100b includes a second base cover 1b and a second explosion-proof valve 30 mounted at the second base cover 1b.

Both the first explosion-proof valve 20 and the second explosion-proof valve 30 are capable of pressure relief. Through the pressure relief by double explosion-proof valves, a gas in the mounting cavity can be more quickly released to avoid explosion of the cell battery 100. Further, the first explosion-proof valve 20 and the second explosion-proof valve 30 are located at two ends of the cell battery 100, respectively. In this way, the pressure relief can be carried out at two ends of the cell battery 100, and the gas in the mounting cavity does not need to flow from one end to the other end of the cell battery 100 before being released, which can satisfy the pressure relief requirements of the cell battery 100 with a larger size.

For example, in an embodiment in which the cell battery 100 is a cylindrical battery, the first explosion-proof valve 20 and the second explosion-proof valve 30 are located at two axial ends of the cylindrical battery, respectively, and a gas in the cylindrical battery can be released from the two axial ends, reducing a flow path required for the gas release. For example, for a cylindrical battery with an axial height greater than 140 mm, pressure relief requirements are higher. A cooperation between the first explosion-proof valve 20 and the second explosion-proof valve 30 according to the embodiments of the present invention can better satisfy the pressure relief requirements of the cell battery 100 with a larger height.

It should be noted that the above embodiments do not limit a shape and a size of the cell battery 100 according to the embodiments of the present invention. Actually, the cell battery 100 according to the embodiments of the present invention may be the cylindrical battery, a prismatic battery, or the like. A height of the cell battery 100 (that is, an overall size of the cell battery 100 in a direction from the first end cover 100a to the second end cover 100b) may be greater than 140 mm, or may be smaller than or equal to 140 mm, which are all within the scope of the present invention.

With the cell battery 100 according to the embodiments of the present invention, since the first end cover 100a includes the first explosion-proof valve 20 and the second end cover 100b includes the second explosion-proof valve 30, the first explosion-proof valve 20 and the second explosion-proof valve 30 can perform the pressure relief through two ends of the cell battery 100. As a result, a pressure relief capacity is improved, which can satisfy higher pressure relief requirements, thereby significantly reducing the risk of thermal runaway.

In some embodiments, the first end cover 100a includes the first base cover 1a, the first pole 20a, the first explosion-proof valve 20, and a first current collector disk 30a. The first pole 20a and the first explosion-proof valve 20 are mounted on the first base cover 1a. The first current collector disk 30a is located at a side of the first base cover 1a facing towards the housing 10, and the first current collector disk 30a is electrically connected to the first pole 20a. The first base cover 1a has an electrolyte injection hole 105. The second end cover 100b includes the second base cover 1b, a second pole 20b, the second explosion-proof valve 30, and a second current collector disk 30b. The second pole 20b and the second explosion-proof valve 30 are mounted on the second base cover 1b. The second current collector disk 30b is located at a side of the second base cover 1b facing towards the housing 10, and the second current collector disk 30b is electrically connected to the second pole 20b.

The first base cover 1a may cover one end of the housing 10 and the second base cover 1b may cover the other end of the housing 10 to define the mounting cavity together with the housing 10. In addition, the first base cover 1a may serve as a mounting base for the first pole 20a, the first explosion-proof valve 20, and the first current collector disk 30a. The second base cover 1b may serve as a mounting base for the second pole 20b, the second explosion-proof valve 30, and the second current collector disk 30b.

One of the first pole 20a and the second pole 20b may be a positive pole, and the other one of the first pole 20a and the second pole 20b may be a negative pole. Correspondingly, one of the first current collector disk 30a and the second current collector disk 30b is a positive current collector disk, and the other one of the first current collector disk 30a and the second current collector disk 30b is a negative current collector disk. One of the first end cover 100a and the second end cover 100b is a positive end cover, and the other one of the first end cover 100a and the second end cover 100b is a negative end cover. In other words, the positive pole and the negative pole are provided at different end covers, respectively, to provide a simpler electrical connection structure on each end cover to facilitate structural arrangement. In addition, a risk of short circuiting between the positive pole and the negative pole due to space limitations is reduced.

A connection manner between the pole and the base cover is not limited by the present invention. For example, as illustrated in FIG. 1 to FIG. 5 and FIG. 8 to FIG. 11, the base cover may have a mounting hole, and the pole may pass through the mounting hole; or the pole and the base cover may be integrally formed. In an embodiment in which the base cover has the mounting hole, the number of mounting holes required for each base cover is reduced, and thus sealing reliability is improved and a cost is lowered.

In addition, the positive pole and the negative pole may be electrically connected to two ends of the cell, respectively. For example, the cell may be provided with a positive tab and a negative tab at two ends of the cell, respectively. The first current collector disk 30a is located at the side of the first base cover 1a facing towards the housing 10. The second current collector disk 30b is located at the side of the second base cover 1b facing towards the housing 10, in such a manner that the positive pole may be connected to the positive tab by the positive current collector disk, and the negative pole may be electrically connected to the negative tab by the negative current collector disk. The positive tab and the negative tab are located at different ends, respectively. A positive electrical connection structure and a negative electrical connection structure are located at different ends. In this way, a risk of short circuits can be effectively reduced, and arrangement of the tabs and connection between the electrical connection structures are facilitated.

In addition, the first base cover 1a has the electrolyte injection hole 105. In other words, one of the positive end cover and the negative end cover has the electrolyte injection hole 105 to facilitate electrolyte injection and reduce the number of openings in the cell battery 100.

With the cell battery 100 according to the embodiment of the present invention, the first end cover 100a includes the first pole 20a, the first explosion-proof valve 20, and the first current collector disk 30a. Further, the second end cover 100b includes the second pole 20b, the second explosion-proof valve 30, and the second current collector disk 30b. In this way, the first explosion-proof valve 20 and the second explosion-proof valve 30 can perform the pressure relief through two ends of the cell battery 100. As a result, the pressure relief capacity is improved, which can satisfy higher pressure relief requirements, thereby significantly reducing the risk of thermal runaway. In addition, the first pole 20a and the second pole 20b are located at the two ends of the cell battery 100, respectively, so as to simplify a structure of the first end cover 100a and a structure of the second end cover 100b, improving sealing performance of the end cover and product quality.

According to some embodiments of the present invention, a projection of the first explosion-proof valve 20 in an axial direction of the cell battery 100 at least partially overlaps with a projection of the second explosion-proof valve 30 in the axial direction of the cell battery 100. In other words, an arrangement position of the first explosion-proof valve 20 on the first base cover 1a is close to an arrangement position of the second explosion-proof valve 30 on the second base cover 1b. For example, in an embodiment in which the explosion valve is arranged eccentrically with respect to a centerline of the base cover, the first explosion-proof valve 20 and the second explosion-proof valve 30 are substantially located at a same side relative to the centerline. Therefore, during assembly, the first explosion-proof valve 20 and the second explosion-proof valve 30 may be assembled at the same side, and thus an assembly process is simplified, thereby improving an assembly efficiency.

In some exemplary embodiments, the projection of the first explosion-proof valve 20 in the axial direction of the cell battery 100 completely overlaps with the projection of the second explosion-proof valve 30 in the axial direction of the cell battery 100. In other words, the first explosion-proof valve 20 is identical with the second explosion-proof valve 30. The arrangement position of the first explosion-proof valve 20 on the first base cover 1a is identical with the arrangement position of the second explosion-proof valve 30 on the second base cover 1b. In this way, not only assembly reliability can be further improved, but also versatility of the explosion-proof valve can be enhanced, lowering a manufacturing cost.

For example, as illustrated in FIG. 1 to FIG. 5 and FIG. 8 to FIG. 11, the first explosion-proof valve 20 and the second explosion-proof valve 30 each are a waist-circular structure with the same size. The first explosion-proof valve 20 and the second explosion-proof valve 30 are located at a front side of the centerline of the base cover on a corresponding base cover and have an equal distance from the centerline. In addition, a length direction of the waist-circular structure extends horizontally. During assembly of the first end cover 100a and the second end cover 100b, an explosion-proof valve of a fixed structure is moved to a predetermined position by a specialized tooling device, realizing mounting of the explosion-proof valve on the base cover. Therefore, the assembly process is simplified and an efficiency is improved.

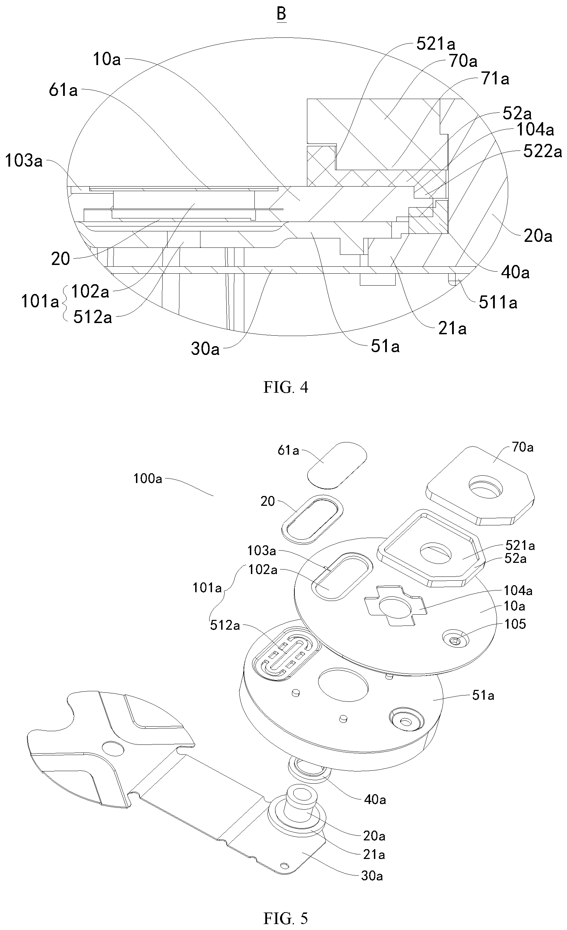

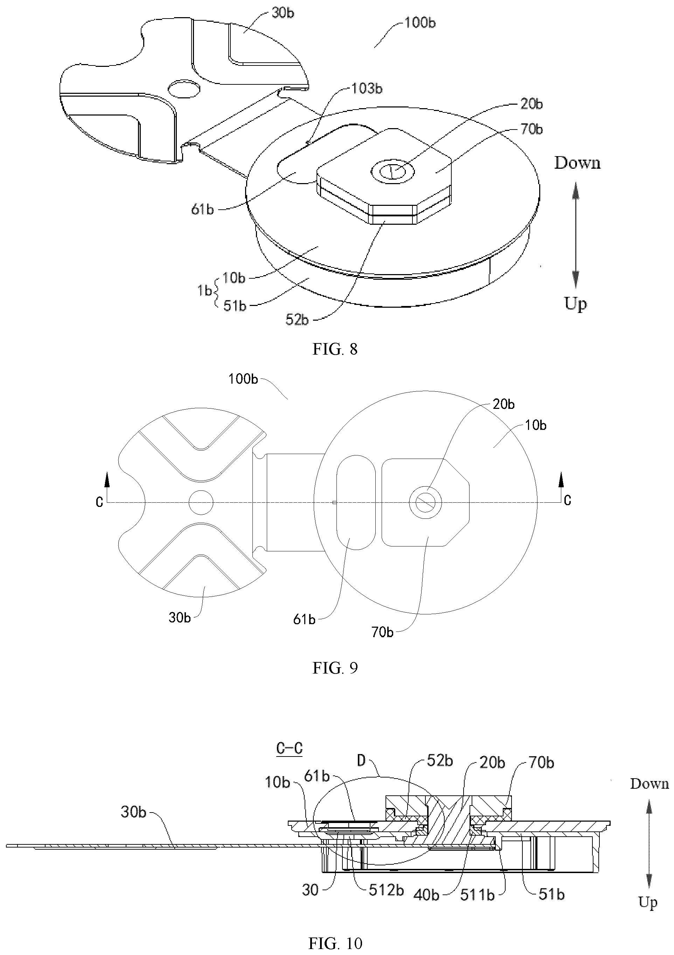

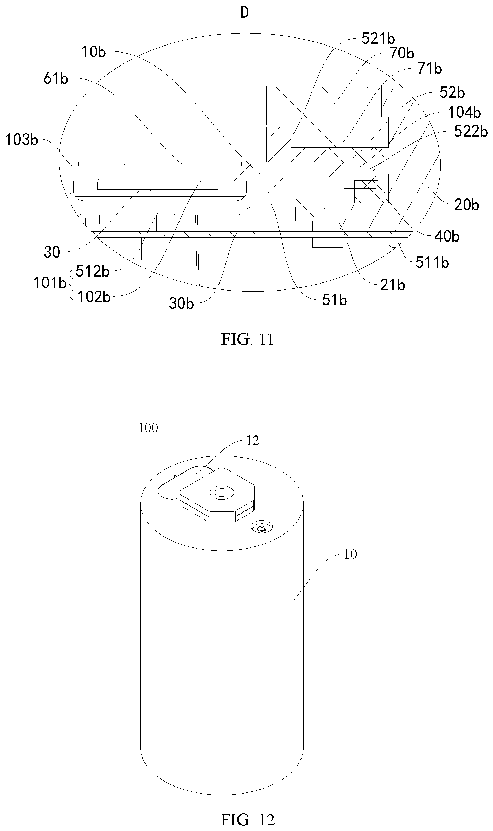

In some embodiments of the present invention, as illustrated in FIG. 4 and FIG. 5, the first base cover 1a has a first exhaust channel 101a. The first explosion-proof valve 20 is mounted at the first exhaust channel 101a. As illustrated in FIG. 10 and FIG. 11, the second base cover 1b has a second exhaust channel 101b. The second explosion-proof valve 30 is mounted at the second exhaust channel 101b.

When heat generated in an interior of the cell battery 100 is too high, a high-pressure fluid may be generated and flow through the first explosion-proof valve 20 and the second explosion-proof valve 30, and then be discharged via the first exhaust channel 101a and the second exhaust channel 101b. In this way, ventilation and explosion-proof functions can be provided.

In some embodiments, as illustrated in FIG. 4 to FIG. 5 and FIG. 10 to FIG. 11, the first end cover 100a further includes a first protective member 61a and the second end cover 100b further includes a second protective member 61b. The first protective member 61a is mounted at the first exhaust channel 101a and located downstream of the first explosion-proof valve 20 in an exhaust direction of the first exhaust channel 101a. The second protective member 61b is mounted at the second exhaust channel 101b and located downstream of the second explosion-proof valve 30 in the exhaust direction of the second exhaust channel 101b.

The first protective member 61a may provide protection for the first explosion-proof valve 20. The second protective member 61b may provide protection for the second explosion-proof valve 30. In the cell process, welding spatter, electrolyte injection, and other foreign materials may contaminate the first explosion-proof valve 20 and the second explosion-proof valve 30, thereby affecting ventilation performance. With the first protective member 61a and the second protective member 61b, foreign materials can be effectively prevented from reaching a surface of the first explosion-proof valve 20 and a surface of the second explosion-proof valve 30.

In some embodiments, the explosion-proof valves may be welded and assembled to the respective base covers. The protective members may be attached to and fixed to the respective base covers.

In some embodiments, as illustrated in FIG. 4 to FIG. 5 and FIG. 10 to FIG. 11, the first base cover 1a further has a first communication channel 103a. The first exhaust channel 101a is in communication with an external environment via the first communication channel 103a. The first explosion-proof valve 20 is offset from the first communication channel 103a to prevent the first explosion-proof valve 20 from blocking the first communication channel 103a. The second base cover 1b further has a second communication channel 103b. The second exhaust channel 101b is in communication with the external environment via the second communication channel 103b. The second explosion-proof valve 30 is offset from the second communication channel 103b to prevent the second explosion-proof valve 30 from blocking the second communication channel 103b. The first communication channel 103a and the second communication channel 103b can allow for gas flow, allowing a gas in the interior of the cell battery 100 to exchange with the external environment to balance a gas pressure.

According to some embodiments of the present invention, as illustrated in FIG. 1 to FIG. 6, the first base cover 1a includes a first insulation cover 51a and a first base plate 10a provided at a side of the first insulation cover 51a away from the housing 10. That is, the first insulation cover 51a is provided between the first current collector disk 30a and the first base plate 10a to realize insulation between the first base plate 10a and the first current collector disk 30a. In some embodiments, the first pole 20a may extend through the first insulation cover 51a to realize connection between the first insulation cover 51a and the first base plate 10a without any additional connection structure, facilitating an electrical connection between the first pole 20a and the first current collector disk 30a.

In addition, the first base plate 10a is provided with the first through-hole 102a and the first communication channel 103a. The first hollowed-out region 512a is located at the first insulation cover 51a. The first exhaust channel 101a includes the first through-hole 102a and the first hollowed-out region 512a. The first explosion-proof valve 20 is mounted between the first base plate 10a and the first insulation cover 51a. Mounting and position-limiting of the first explosion-proof valve 20 can be realized by the first base plate 10a and the first insulation cover 51a. The first explosion-proof valve 20 may be stably located at the first exhaust channel 101a, providing reliable explosion protection. In addition, the first hollowed-out region 512a is located at the first insulation cover 51a, which not only facilitates ventilation and explosion protection but also ensures structural strength of the first insulation cover 51a, preventing the first insulation cover 51a from being perforated in a large area, and thus affecting the structural strength.

According to some embodiments of the present invention, as illustrated in FIG. 8 to FIG. 11, the second base cover 1b includes a second insulation cover 51b and a second base plate 10b provided at a side of the second insulation cover 51b away from the housing 10. The second base plate 10b is provided with a second through-hole 102b and the second communication channel 103b. The second hollowed-out region 512b is located at the second insulation cover 51b. The second exhaust channel 101b includes the second through-hole 102b and the second hollowed-out region 512b. The second explosion-proof valve 30 is mounted between the second base plate 10b and the second insulation cover 51b. A specific structure, a mating structure, and beneficial effects of the second base cover 1b are similar to those of the first base cover 1a, and thus details thereof will be omitted here.

According to some embodiments of the present invention, as illustrated in FIG. 1 to FIG. 4, the first current collector disk 30a is located at a side of the first pole 20a adjacent to the housing 10. For example, the first current collector disk 30a may be located at an inner side of the first base plate 10a (for example a lower side illustrated in FIG. 1). In addition, the first current collector disk 30a is laser-welded to the first pole 20a. As illustrated in FIG. 8 to FIG. 11, the second current collector disk 30b is located at a side of the second pole 20b adjacent to the housing 10. For example, the second current collector disk 30b may be located at an inner side of the second base plate 10b (for example an upper side illustrated in FIG. 8). In addition, the second current collector disk 30b is laser-welded to the second pole 20b.

Compared with an ultrasonic welding method in the related art, the laser welding method can greatly improve sealing performance and avoid a problem of puncturing a sealing structure during ultrasonic welding. Compared with riveting in the related art, this method can eliminate need for perforating in the first current collector disk 30a and the second current collector disk 30b, reducing seams that needs to be sealed, and thus improving the sealing.

In some embodiments, as illustrated in FIG. 3 to FIG. 4 and FIG. 9 to FIG. 11, the first current collector disk 30a is in surface contact with the first pole 20a, and the second current collector disk 30b is in surface contact with the second pole 20b to increase a contact area. In this way, a current-carrying capacity and heat dissipation effect are improved, and heat generation is reduced. In addition, connection reliability and structural stability between the first current collector disk 30a and the first pole 20a as well as those between the second current collector disk 30b and the second pole 20b can also be improved.

In some specific embodiments, a laser welding path is in a continuous annular shape, which provides a larger welding area, resulting in higher strength and a more reliable connection. Further, the current-carrying capacity is enhanced, making the welding operation more convenient.

In some embodiments, the first base plate 10a and the second base plate 10b may be made of lightweight aluminum sheets, such as Al 3003, by stamping aluminum material.

In some embodiments, the first insulation cover 51a and the second insulation cover 51b may be injection molded from PP, which satisfies manufacturing requirements for relatively complex structures. The first insulation cover 51a and the second insulation cover 51b may be made of a transparent material or may be colored by adding a color masterbatch to produce black or other colors. A material of the first pole 20a and a material of the second pole 20b may be selected as desired. For example, the negative pole may be made of copper, such as T2 copper, and the positive pole may be made of aluminum, such as Al 1060 or Al 3003.

A material of the first current collector disk 30a and a material of the second current collector disk 30b may be selected as desired. For example, the negative current collector disk may be stamped from a nickel-plated copper material. The positive current collector disk may be made of aluminum, such as Al 1060.

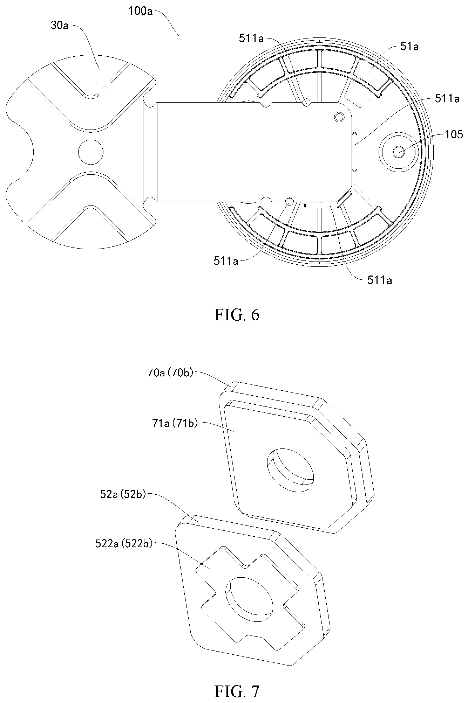

In some embodiments of the present invention, as illustrated in FIG. 4 and FIG. 6, the first base cover 1a is provided with a first limiting rib 511a on a surface of the first base cover 1a facing towards the housing 10. For example, in an embodiment in which the first base cover 1a includes the first insulation cover 51a, and the first insulation cover 51a is provided with the first limiting rib 511a on a surface of the first insulation cover 51a facing towards the housing 10. The first limiting rib 511a extends along an edge of the first current collector disk 30a and is in clearance fit (in direct contact or spaced apart by a small gap) with the edge of the first current collector disk 30a.

In a manufacturing process, the first current collector disk 30a may be mounted at a side of the first base cover 1a, allowing the first limiting rib 511a to be engaged with the edge of the first current collector disk 30a to limit the first current collector disk 30a in a direction perpendicular to an axis of the first pole 20a. Then, the first current collector disk 30a is connected to the first pole 20a, for example, through laser welding, preventing misalignment of the first current collector disk 30a during connection, which would affect connection reliability and sealing.

In some embodiments of the present invention, as illustrated in FIG. 11, the second base cover 1b is provided with a second limiting rib 511b on a surface of the second base cover 1b facing towards the housing 10. For example, in an embodiment in which the second base cover 1b includes the second insulation cover 51b, and the second insulation cover 51b is provided with the second limiting rib 511b on a surface of the second insulation cover 51b facing towards the housing 10. The second limiting rib 511b extends along an edge of the second current collector disk 30b and is in clearance fit (in direct contact or spaced apart by a smaller gap) with the edge of the second current collector disk 30b to realize limiting of the second current collector disk 30b and ensure connection reliability and sealing between the second current collector disk 30b and the second pole 20b.

According to some embodiments of the present invention, as illustrated in FIG. 3 to FIG. 5, the first pole 20a is provided with a first outer protrusion 21a on a circumferential surface of an end of the first pole 20a facing towards the first current collector disk 30a. An end surface of the first pole 20a and an end surface of the first outer protrusion 21a may constitute a larger contact surface for contacting with the first current collector disk 30a. In this way, a contact area with the first current collector disk 30a can be increased, thereby improving a position-limiting effect and connection reliability of the first current collector disk 30a.

In some embodiments, as illustrated in FIG. 4 and FIG. 5, the first end cover 100a may further include a first seal 40a. The first seal 40a is sleeved on the first pole 20a and abuts between the first outer protrusion 21a and the first base cover 1a to seal a gap between the first outer protrusion 21a and the first base cover 1a. As a result, sealing of a mounting structure of the first pole 20a can be realized.

In some exemplary embodiments, the first seal 40a may be made of rubber or silicone, and is elastically deformable by being compressed by the first outer protrusion 21a and the first base cover 1a to improve sealing.

According to some embodiments of the present invention, as illustrated in FIG. 8 to FIG. 11, the second pole 20b is provided with a second outer protrusion 21b on a circumferential surface of an end of the second pole 20b facing towards the second current collector disk 30b, so as to increase a contact area between the second pole 20b and the second current collector disk 30b. As a result, a position-limiting effect and connection reliability of the second current collector disk 30b can be improved.

In some embodiments, as illustrated in FIG. 10 and FIG. 11, the second end cover 100b further includes a second seal 40b. The second seal 40b is sleeved on the second pole 20b and abuts between the second outer protrusion 21b and the second base cover 1b to realize sealing of a mounting structure of the second pole 20b. For example, the second seal 40b may be made of a material such as rubber or silicone. According to some embodiments of the present invention, as illustrated in FIG. 1 to FIG. 7, the first end cover 100a further includes a first pressing block 70a provided at a side of the first base cover 1a away from the housing 10 (an upper side illustrated in FIG. 3). The first pole 20a rivets the first base cover 1a and the first pressing block 70a together. On the one hand, a mechanical connection is realized to form an integral unit, which significantly simplifies an assembly structure and thus lowers a manufacturing cost. On the other hand, electrical connections between the first current collector disk 30a, the first pole 20a, and the first pressing block 70a are realized, thereby providing a simple and reliable structure. In some embodiments, the first pole 20a may be a rivet. Only one mounting hole corresponding to the rivet needs to be formed on the first base cover 1a, reducing the number of openings on the first base cover 1a and a required sealing structure, and thus significantly improving the sealing performance.

As illustrated in FIG. 7 to FIG. 11, the second end cover 100b further includes a second pressing block 70b provided at a side of the second base cover 1b away from the housing 10 (a lower side as illustrated in FIG. 10). The second pole 20b rivets the second base cover 1b and the second pressing block 70b together. The structure is simple and firm, and the number of openings of the second base cover 1b and the required sealing structure are reduced, thereby significantly improving the sealing performance.

In some embodiments, as illustrated in FIG. 1 to FIG. 7, the first end cover 100a may further include a first spacer 52a provided between the first pressing block 70a and the first base cover 1a. For example, as illustrated in FIG. 3, the first spacer 52a is provided at an upper side of the first base cover 1a to form a spacer to implement insulation between the first pressing block 70a and the first base cover 1a.

In some embodiments, as illustrated in FIG. 7 to FIG. 11, the second end cover 100b may further include a second spacer 52b provided between the second pressing block 70b and the second base cover 1b. For example, as illustrated in FIG. 10, the second spacer 52b is provided at a lower side of the second base cover 1b to form a spacer to implement insulation between the second pressing block 70b and the second base cover 1b.

In some embodiments, the first pole 20a and the second pole 20b may be manufactured using cold heading.

In some embodiments, the first spacer 52a and the second spacer 52b may be injection molded from PP or PPS. A spacer corresponding to a negative electrode is made of an insulating material. When the spacer is made of PPS, glass fibers may further be added to increase mechanical strength. A spacer corresponding to a positive electrode may have with conductive carbon and glass fibers added.

In some embodiments of the present invention, as illustrated in FIG. 4, FIG. 5, and FIG. 7, the first spacer 52a may have a first limiting recess 521a. The first pressing block 70a may be provided with a first limiting protrusion 71a engaged into the first limiting recess 521a. In addition, the first limiting protrusion 71a has a non-circular cross-section perpendicular to an axis of the first pole 20a. A shape of the first limiting recess 521a matches a shape of the first limiting protrusion 71a. Therefore, the first limiting protrusion 71a is engaged into the first limiting recess 521a to limit the first pressing block 70a and the first spacer 52a in a circumferential direction of the first pole 20a. As a result, the structural strength and torsional resistance can be enhanced, thereby improving connection reliability between the first pole 20a and the first current collector disk 30a.

An arrangement position of the first limiting recess 521a may be interchanged with an arrangement position of the first limiting protrusion 71a. That is, the first pressing block 70a has the first limiting recess 521a, and the first spacer 52a is provided with the first limiting protrusion 71a. In other words, one of the first pressing block 70a and the first spacer 52a has a first limiting recess 521a, and the other one of the first pressing block 70a and the first spacer 52a is provided with a first limiting protrusion 71a engaged into the first limiting recess 521a. The first limiting protrusion 71a has a non-circular cross-section perpendicular to an axis of the first pole 20a.

In some embodiments of the present invention, as illustrated in FIG. 7, FIG. 10, and FIG. 11, one of the second pressing block 70b and the second spacer 52b has a second limiting recess 521b, and the other one of the second pressing block 70b and the second spacer 52b is provided with a second limiting protrusion 71b engaged into the second limiting recess 521b. In addition, the second limiting protrusion 71b has a non-circular cross-section perpendicular to an axis of the second pole 20b. A shape of the second limiting recess 521b matches a shape of the second limiting protrusion 71b. Therefore, the second pressing block 70b and the second spacer 52b are limited in a circumferential direction of the second pole 20b. As a result, structural strength and torsional resistance can be enhanced, thereby improving connection reliability between the second pole 20b and the second current collector disk 30b.

It should be noted that the cross-section of each of the first limiting protrusion 71a and the second limiting protrusion 71b includes, but is not limited to a hexagonal shape illustrated in FIG. 7, and may be another shape as long as the shape satisfies requirements of enhancing torsional resistance.

In some embodiments of the present invention, as illustrated in FIG. 4, FIG. 5, and FIG. 7, the first base cover 1a may have a third limiting recess 104a. The first spacer 52a is provided with a third limiting protrusion 522a engaged into the third limiting recess 104a. In addition, the third limiting protrusion 522a has a non-circular cross-section perpendicular to an axis of the first pole 20a. Therefore, the third limiting protrusion 522a is engaged with the third limiting recess 104a to limit the first base cover 1a and the first spacer 52a in the circumferential direction of the first pole 20a. As a result, structural strength and torsional resistance can be enhanced, thereby improving connection reliability between the first pole 20a and the first current collector disk 30a.

An arrangement position of the third limiting recess 104a may be interchanged with an arrangement position of the third limiting protrusion 522a. That is, the first spacer 52a has the third limiting recess 104a, and the first base cover 1a is provided with the third limiting protrusion 522a. In other words, one of the first base cover 1a and the first spacer 52a has the third limiting recess 104a, and the other one of the first base cover 1a and the first spacer 52a is provided with the third limiting protrusion 522a engaged into the third limiting recess 104a. The third limiting protrusion 522a has a non-circular cross-section perpendicular to the axis of the first pole 20a.

In some embodiments of the present invention, as illustrated in FIG. 7 and FIG. 11, one of the second base cover 1b and the second spacer 52b has a fourth limiting recess 104b, and the other one of the second base cover 1b and the second spacer 52b is provided with a fourth limiting protrusion 522b engaged into the fourth limiting recess 104b. In addition, the fourth limiting protrusion 522b has a non-circular cross-section perpendicular to an axis of the second pole 20b. Therefore, the fourth limiting protrusion 522b is engaged into the fourth limiting recess 104b to limit the second base cover 1b and the second spacer 52b in the circumferential direction of the second pole 20b. As a result, structural strength and torsional resistance can be enhanced, thereby improving connection reliability between the second pole 20b and the second current collector disk 30b.

It should be noted that the cross-section of each of the third limiting protrusion 522a and the fourth limiting protrusion 522b includes, but is not limited to, a cross shape illustrated in FIG. 7, and may be another shape as long as the shape satisfies requirement of enhancing torsional resistance.

An assembly process of the first end cover 100a according to some embodiments of the present invention is described below with reference to the accompanying drawings. From the following description, an assembly process of the second end cover 100b may be understood.

According to some embodiments of the present invention, as illustrated in FIG. 1 to FIG. 11, the first explosion-proof valve 20 is welded and assembled to the first base plate 10a. Then, the first seal 40a is sleeved on the first pole 20a. The first pole 20a extends through the first insulation cover 51a, the first base plate 10a, the first spacer 52a, and the first pressing block 70a, and then assembled together through riveting. Then, the first current collector disk 30a is laser-welded to the first pole 20a to realize connection between the first current collector disk 30a and the riveted unit. Finally, air tightness detection, connection internal resistance detection, insulation performance detection, cleaning, appearance detection, etc. are carried out. Then, the first protective member 61a for protecting the first explosion-proof valve 20 is mounted to obtain the first end cover 100a.

A battery pack according to embodiments of the present invention includes the cell battery 100 according to the embodiments of the present invention. Since the cell battery 100 according to the embodiments of the present invention has the above beneficial technical effects, with the battery pack according to the embodiments of the present invention, since the first end cover 100a includes the first explosion-proof valve 20 and the second end cover 100b includes the second explosion-proof valve 30, the first explosion-proof valve 20 and the second explosion-proof valve 30 can perform the pressure relief through two ends of the cell battery 100. As a result, the pressure relief capacity is improved, which can satisfy the higher-pressure relief requirements, thereby significantly reducing the risk of thermal runaway.

As a new type of energy storage device, a power battery is widely used in automobile, aerospace, high-speed rail, and other fields. With the development of power battery industry, higher requirements for energy density, cycle performance, and other indicators of the power battery are required. During use of the power battery, thermal runaway may occur in an internal cell due to various reasons. When thermal runaway occurs in the cell, a large amount of gas may be generated in a short period of time. When the gas inside the cell battery 100 cannot be discharged in time, there is a risk of explosion.

To reduce the safety hazards associated with an increased internal pressure due to the thermal runaway in the cell battery, an explosion-proof valve is typically mounted at an end of the cell battery. When the gas pressure inside the cell battery increases, the explosion-proof valve opens to allow the gas to be discharged from the cell battery, thereby reducing the safety hazards. In the related art, only one explosion-proof valve is typically provided. When the explosion-proof valve fails or reactions in the cell battery are too intense, the gas inside the cell battery cannot be discharged in time, which would result in significant safety hazards.

The cell battery 100 according to the embodiments of the present invention is described below with reference to FIG. 12 to FIG. 18.

As illustrated in FIG. 12 to FIG. 13, a cell battery 100 according to the embodiments of the present invention includes a housing 10, a first explosion-proof valve 20, and a second explosion-proof valve 30.

The housing 10 is in a cylindrical shape. The first explosion-proof valve 20 and the second explosion-proof valve 30 are provided at two axial ends of the housing 10, respectively. An opening pressure of the first explosion-proof valve 20 is unequal to an opening pressure of the second explosion-proof valve 30.

In an exemplary embodiment of the present invention, the first explosion-proof valve 20 and the second explosion-proof valve 30 are provided at two axial ends of the housing 10 of the cell battery 100, respectively. In addition, an opening pressure of the first explosion-proof valve 20 is unequal to an opening pressure of the second explosion-proof valve 30. When the cell battery 100 just experiences the thermal runaway, gas is generated in the cell battery, and the gas expands inside the cell battery 100 and compresses the housing 10. When the gas in the cell battery 100 reaches a predetermined pressure, one of the first explosion-proof valve 20 and the second explosion-proof valve 30 which has a smaller opening pressure opens, allowing the gas to be smoothly discharged through the first explosion-proof valve 20 or the second explosion-proof valve 30. If the thermal runaway in the cell battery 100 becomes relatively intense, a pressure inside the housing 10 continues to rise, causing one of the first explosion-proof valve 20 and the second explosion-proof valve 30 which has a higher opening pressure to open. In this case, both the first explosion-proof valve 20 and the second explosion-proof valve 30 are in an open state, allowing the gas to be released by both the first explosion-proof valve 20 and the second explosion-proof valve 30 simultaneously.

With the cell battery 100 according to the embodiments of the present invention, by providing two explosion-proof valves with different opening pressures, when severe thermal runaway occurs inside the cell battery 100, the first explosion-proof valve 20 and the second explosion-proof valve 30 can successively open to allow the gas to be released in time, thereby reducing the safety hazards.

It should be noted that a relationship between the opening pressure of the first explosion-proof valve 20 and the opening pressure of the second explosion-proof valve 30 is not specifically limited. For example, the opening pressure of the first explosion-proof valve 20 may be smaller than the opening pressure of the second explosion-proof valve 30, or the opening pressure of the first explosion-proof valve 20 may be greater than the opening pressure of the second explosion-proof valve 30, which may be selected as necessary.

In some embodiments, a difference between the opening pressure of the first explosion-proof valve 20 and the opening pressure of the second explosion-proof valve 30 is greater than or equal to 0.1 MPa.

In an exemplary embodiment of the present invention, by setting different opening pressures for the first explosion-proof valve 20 and the second explosion-proof valve 30, when the thermal runaway occurs in the cell battery 100, the explosion-proof valve with a smaller opening pressure may be opened. Then, when the thermal runaway becomes severe and an internal pressure of the battery 100 continues to rise, the explosion-proof valve with a greater opening pressure may then be opened. In this way, the gas can be discharged in time. Since the first explosion-proof valve 20 and the second explosion-proof valve 30 have different structural strengths, the first explosion-proof valve 20 and the second explosion-proof valve 30 have different opening pressures. The explosion-proof valve with the greater opening pressure has a higher structural strength. When the cell battery 100 is used normally, the cell battery 100 with the higher structural strength is less likely to be damaged, and thus the cell battery 100 is more reliable.

In addition, when the thermal runaway occurs in the cell battery 100 and gas generation begins inside the cell battery 100, pressure relief can be completed by opening the explosion-proof valve with a lower pressure. When the thermal runaway is controlled in this time and gas generation of the cell battery 100 is small, the pressure relief requirements of the cell battery 100 can be satisfied by opening one explosion-proof valve, which can prevent a high-temperature gas generated inside the cell battery 100 from affecting surrounding cell batteries 100. In later maintenance, only the damaged cell battery 100 needs to be replaced.

Therefore, only one explosion-proof valve is opened when a gas pressure inside the cell battery 100 is relatively low. Therefore, reliability of the cell battery is improved.

### First Embodiment

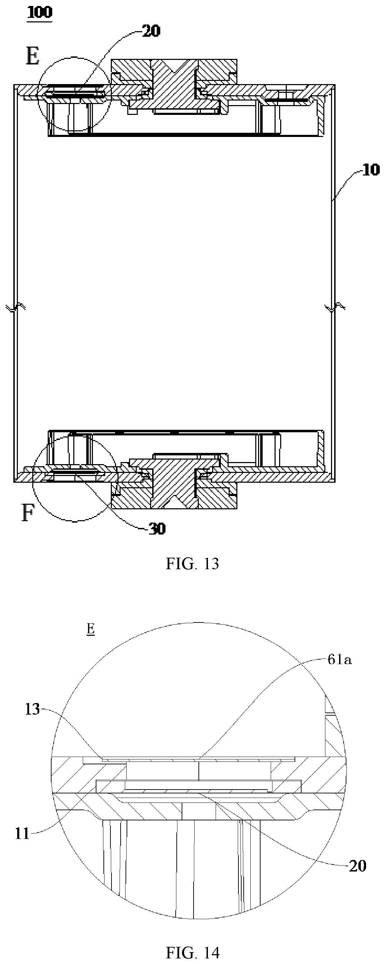

As illustrated in FIG. 14 to FIG. 17, in some embodiments, the first explosion-proof valve 20 includes a first body 21. The first body 21 has a first groove 211. The second explosion-proof valve 30 includes a second body 31. The second body 31 has a second groove 311.

In an exemplary embodiment of the present invention, when the thermal runaway occurs in the cell battery 100, a large amount of gas is generated inside the cell battery 100. The internal pressure of the housing 10 rapidly increases. Pressure is exerted by the gas to the first body 21 and the second body 31 that are located at two ends of the housing 10. In this case, the first body 21 and the second body 31 tend to break outwardly. Since the first body 21 has a smaller thickness and a lower structural strength at the first groove 211, and the second body 31 has a smaller thickness and a lower structural strength at the second groove 311, when a predetermined pressure is reached in the housing 10, the first body 21 and the second body 31 rupture from the first groove 211 and the second groove 311, respectively.

Therefore, the first explosion-proof valve 20 and the second explosion-proof valve 30 can be opened at an indentation when being subject to the pressure. By controlling a depth of the indentation, the opening pressure can be controlled, enhancing reliability of the cell battery 100.

In some embodiments, the first groove 211 of the first body 21 is in a cross shape. The second groove 311 of the second body 31 is in a cross shape. When the thermal runaway occurs in the cell battery 100 and the pressure in the housing 10 rises rapidly, a gas generated by the thermal runaway may compress the first explosion-proof valve 20 and the second explosion-proof valve 30 at two ends of the housing 10, and a center of the first body 21 and a center of the second body 31 may bulge and deform. When the pressure in the housing 10 rises to some extent, the first body 21 may break from a cross center of the first groove 211, and the second body 31 may also split from a cross center of the second groove 311, thereby achieving the pressure relief.

In some embodiments, the first groove 211 of the first body 21 is circular. The second groove 311 of the second body 31 is circular. Circular indentations are located at the center of the first body 21 and the center of the second body 31, respectively. When the thermal runaway occurs in the cell battery 100 and the pressure in the housing 10 rises rapidly, the gas generated by the thermal runaway may compress the first explosion-proof valve 20 and the second explosion-proof valve 30 at two ends of the housing 10, and a center of the first body 21 and a center of the second body 31 may bulge and deform. When the pressure in the housing 10 rises to some extent, the first body 21 may break from a circular first groove 211, and the second body 31 may also split from a circular second groove 311, thereby achieving the pressure relief.

It should be noted that a shape of the first groove 211 and a shape of the second groove 311 are not specifically limited here. For example, both of the first groove 211 and the second groove 311 may have a cross shape or a circular shape, or one of the first groove 211 and the second groove 311 may have a cross shape and the other one of the first groove 211 and the second groove 311 may have a circular shape, which may be provided as desired.

In some embodiments, the first groove 211 has a depth unequal to a depth of the second groove 311.

In an exemplary embodiment of the present invention, as the indentation is deeper, the structural strength becomes lower. For convenience of understanding, as an example, the first groove 211 has a greater depth than the second groove 311. When the thermal runaway occurs in the cell battery 100, the pressure in the housing 10 increases, and the first groove 211 and the second groove 311 tend to break outwardly. When the pressure in the housing 10 reaches a predetermined level, a deeper depth of the first groove 211 results in lower structural strength for the first explosion-proof valve 20. In this case, when the pressure in the housing 10 reaches the opening pressure of the first explosion-proof valve 20, the first groove 211 ruptures under the pressure, thereby releasing the gas in the housing 10. When the thermal runaway in the cell battery 100 become too intense, which results in generation of a large volume of gas in the housing 10, in this case the first explosion-proof valve 20 cannot be able to relieve the pressure in the housing 10 in time. Therefore, the pressure in the cell battery 100 continues to rise and eventually reaches the opening pressure of the second explosion-proof valve 30. In this case, the second groove 311 ruptures under pressure, and both the first explosion-proof valve 20 and the second explosion-proof valve 30 open simultaneously to relieve the pressure in the housing 10.

Therefore, the number of the opened explosion-proof valves can be controlled according to a value of the internal pressure of the cell battery 100, thereby improving reliability of the cell battery 100.

It should be noted that a relative depth of the first groove 211 to the second groove 311 is not specifically limited here. The depth of the first groove 211 may be greater than the depth of the second groove 311, or the depth of the first groove 211 may be smaller than the depth of the second groove 311, as long as the first groove 211 and the second groove 311 have different depths, which may be set as desired.

It should be further noted that, a material of the first body 21 and a material of the second body 31 are not specifically limited here. The first body 21 and the second body 31 may be made of metal sheets or plastic sheets with high structural strength, which may be provided as desired.

In some embodiments, the first body 21 and the second body 31 are each made of an aluminum sheet. A difference between the depth of the first groove 211 and the depth of the second groove 311 is greater than or equal to 90 micrometers.

In an exemplary embodiment of the present invention, the aluminum sheet has a predetermined degree of ductility. When the cell battery 100 is subjected to compression or impact to be in contact with the first explosion-proof valve 20 or the second explosion-proof valve 30, the thermal runaway may not occur in the cell battery 100. In this case, the first body 21 with the predetermined ductility and the second body 31 with the predetermined ductility can prevent the first explosion-proof valve 20 or the second explosion-proof valve 30 from rupturing due to the impact. In this way, the reliability of the cell battery 100 is enhanced.

When the thermal runaway occurs in the cell battery 100, the gas is generated in the cell battery 100, and the pressure in the housing 10 rises rapidly. The first body 21 or the second body 31 bulges outwardly under the pressure of the gas in the housing 10. When deformation reaches a certain extent, the first body 21 or the second body 31 ruptures, and thus the gas in the housing 10 is discharged, relieving the internal pressure. As the thermal runaway intensifies, the internal pressure of the housing 10 continues to rise. When the predetermined pressure is reached, the other one of the first body 21 or the second body 31 may rupture. The pressure of the cell battery 100 is released simultaneously by both the first explosion-proof valve 20 and the second explosion-proof valve 30 at two ends of the housing 10.

By controlling the difference between the depth of the first groove 211 and the depth of the second groove 311 to be greater than or equal to 90 micrometers, the opening pressure of the first explosion-proof valve 20 and the opening pressure of the second explosion-proof valve 30 can be controlled, and an opening interval between the first explosion-proof valve 20 and the second explosion-proof valve 30 can be controlled, in such a manner that the cell battery 100 can quickly release the pressure of the cell battery 100 while having high reliability.

Therefore, the number of the opened explosion-proof valves can be controlled according to the value of the internal pressure of the cell battery 100, thereby improving the reliability of the cell battery 100 while enhancing safety of the cell battery 100.

It should be noted that the first body 21 and the second body 31 may also be made of other metal materials, such as a copper sheet or an iron sheet, which may be selected as desired.

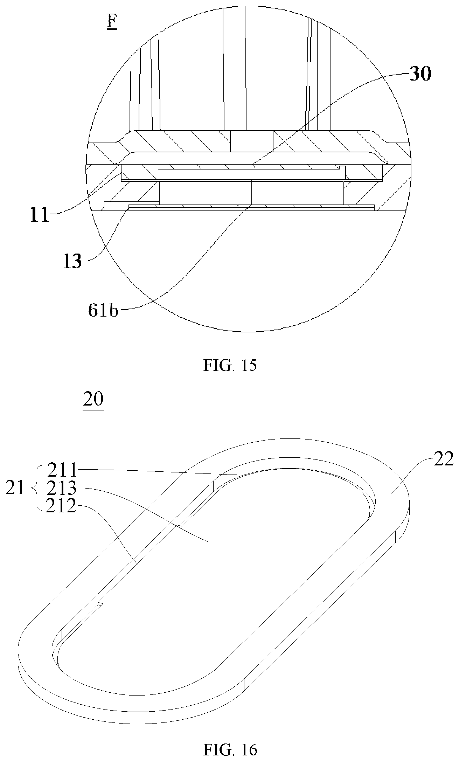

As illustrated in FIG. 16 to FIG. 17, in some embodiments, the first groove 211 extends along a part of an edge of the first body 21. The second groove 311 extends along a part of an edge of the second body 31. An area of the first body 21 is unequal to an area of the second body 31.

In an exemplary embodiment of the present invention, when the first body 21 ruptures at the first groove 211, the first body 21 may rupture along the edge of the first body 21. When the second body 31 ruptures at the second groove 311, the second body 31 may rupture along the edge of the second body 31. In this case, the first explosion-proof valve 20 and the second explosion-proof valve 30 each have a large opening area, and thus the pressure in the housing 10 can be quickly released.

As the thermal runaway of the cell battery 100 continues, a rate at which the gas is generated in the housing 10 also continues to increase. A rate at which the gas is generated in the housing 10 when the first body 21 ruptures is different from a rate at which the gas is generated in the housing 10 when the second body 31 ruptures. By setting the area of the first body 21 and the area of the second body 31 to be different from each other, the sheet with a small area may be opened immediately after the thermal runaway occurs when the rate of the gas is small, and then a sheet with a large area may be opened when the thermal runaway becomes severe and the rate of the gas is large. Therefore, timely pressure relief in the housing 10 is ensured.

Therefore, a gas discharge rate can be adjusted based on the area of the first body 21 and the area of the second body 31, and thus the gas generated due to the thermal runaway can be quickly discharged, thereby reducing safety hazards.

In some embodiments, the first body 21 includes a first connection segment 212. Two ends of the first connection segment 212 are connected to two ends of the first groove 211, respectively. A first opening region 213 is enclosed by the first connection segment 212 and the first groove 211. The second body 31 includes a second connection segment 312. Two ends of the second connection segment 312 are connected to two ends of the second groove 311, respectively. A second opening region 313 is enclosed by the second connection segment 312 and the second groove 311.

In an exemplary embodiment of the present invention, when the thermal runaway occurs in the cell battery 100 and the gas is generated internally, the first explosion-proof valve 20 and the second explosion-proof valve 30 may rupture sequentially. Since the first opening region 213 is connected to the first body 21 by the first connection segment 212, when the first opening region 213 ruptures, the first connection segment 212 can prevent the first opening region 213 from flying out due to the impact of the gas. The second opening region 313 is connected to the second body 31 by the second connection segment 312. When the second opening region 313 ruptures, the second connection segment 312 can prevent the second opening region 313 from flying out due to the impact of the gas. Therefore, safety is improved.

As illustrated in FIG. 16 to FIG. 17, in some embodiments, at least one of the first body 21 and the second body 31 is provided with a connection portion 22 at an edge of the at least one of the first body 21 and the second body 31. When the first explosion-proof valve 20 is provided with the connection portion 22, the connection portion 22 is in an annular shape and extends along an edge of the first body 21. The first body 21 has a smaller thickness than the connection portion 22. The first groove 211 is formed at a connection between the first body 21 and the connection portion 22. When the second explosion-proof valve 30 is provided with the connection portion 22, the connection portion 22 is in an annular shape and extends along an edge of the second body 31. The second body 31 has a smaller thickness than the connection portion 22. The second groove 311 is formed at a connection between the second body 31 and the connection portion 22. Therefore, the connection portion 22 can stably support the first body 21 and the second body 31, to prevent the first explosion-proof valve 20 or the second explosion-proof valve 30 from being damaged during normal use of the cell battery 100, thereby improving reliability.

It should be understood that the connection portion 22 is connected to two ends of the housing 10 to allow the first explosion-proof valve 20 and the second explosion-proof valve 30 to be fixed to the housing 10. Here, there is no specific limitation on a connection manner between the connection portion 22 and the housing 10. The connection portion 22 may be engaged with, bonded to, or welded to the housing 10, which may be selected as desired, as long as the connection portion 22 is stably connected to two ends of the housing 10.

### Second Embodiment

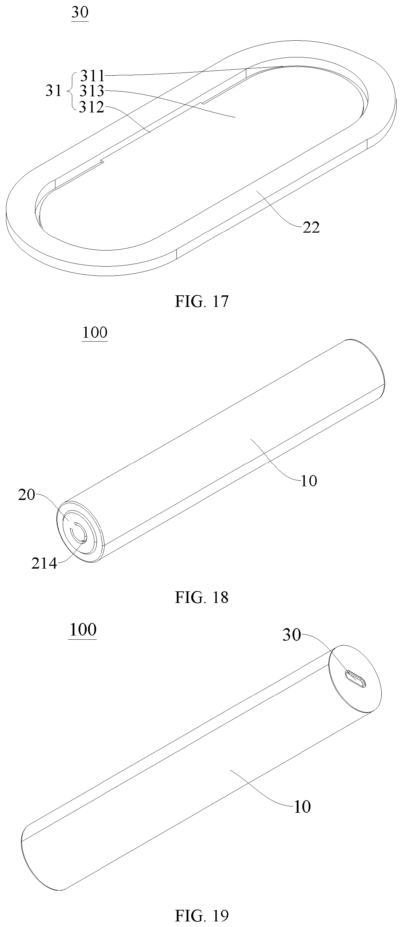

As illustrated in FIG. 18 to FIG. 19, in some embodiments, the housing 10 has an end provided with the first explosion-proof valve 20 and the other end (i.e., the second base cover 1b) provided with a first engagement groove 11. The second explosion-proof valve 30 is connected at the first engagement groove 11.

In an exemplary embodiment of the present invention, the first explosion-proof valve 20 is integrally formed at one end of the housing 10. The second explosion-proof valve 30 is connected to the other end of the housing 10 through the first engagement groove 11. The opening pressure of the first explosion-proof valve 20 and the opening pressure of the second explosion-proof valve 30 may be different from each other according to different connection methods. Since the second explosion-proof valve 30 is connected to the housing 10 through the first engagement groove 11, structural strength of the second explosion-proof valve 30 is lower than that of the first explosion-proof valve 20. Therefore, when the thermal runaway occurs in the cell battery 100, the second explosion-proof valve 30 is opened. When the internal pressure of the housing 10 continues to rise and reaches a predetermined level, the first explosion-proof valve 20 is opened.

Therefore, the opening pressure of the first explosion-proof valve 20 is different from the opening pressure of the second explosion-proof valve 30. The number of the opened explosion-proof valves can be selected according to a thermal runaway situation of the cell battery 100, thereby reducing safety hazards when the thermally runaway occurs in the cell battery 100.

In some embodiments, an end surface of the housing 10 (i.e., the first base cover 1a) has a third groove 214 extending in an arc shape. The first explosion-proof valve 20 is formed by the third groove 214 and a region enclosed by the third groove 214.

In an exemplary embodiment of the present invention, when the housing 10 of the cell battery 100 is manufactured, a sealing structure may be formed on the end surface of the housing 10 through an integral molding process. In addition, the third groove 214 can be provided at a bottom end surface, improving manufacturing efficiency of the housing 10. After loading a wound core and electrolyte into an open end of the housing 10, the other end of the housing 10 may be sealed to form an enclosed cell battery structure. When the thermal runaway occurs in the cell battery 100, gas generation in the cell battery increases the internal pressure of the cell battery 100. Under this pressure, the first explosion-proof valve 20 can rupture at the third groove 214, releasing the internal pressure of the cell battery 100 while ensuring safety of the cell battery 100.

Therefore, the first explosion-proof valve 20 and the housing 10 are integrally formed, which can reduce difficulty of manufacturing the cell battery 100 and improve the manufacturing efficiency.

In some embodiments, the second explosion-proof valve 30 is connected at the first engagement groove 11 through welding. Unlike the first explosion-proof valve 20 formed integrally on the housing 10, by welding the second explosion-proof valve 30 and the housing 10, the strength of the connection between the second explosion-proof valve 30 and the housing is lower than that of the connection between the first explosion-proof valve 20 and the housing. Therefore, the second explosion-proof valve 30 is opened when the thermal runaway occurs in the cell battery 100. When the internal pressure of the housing 10 continues to rise and reaches a predetermined level, the first explosion-proof valve 20 is opened.

Therefore, the number of the opened explosion-proof valves can be selected according to the thermal runaway situation of the cell battery 100, thereby reducing the safety hazards when the thermally runaway occurs in the cell battery 100.

As illustrated in FIG. 14 to FIG. 15, in some embodiments, the housing 10 further has a second engagement groove 13 located at an outer side of the first engagement groove 11. The first protective member 61a is further provided at the second engagement groove 13 corresponding to the second explosion-proof valve 30. The first protective member 61a covers a side of the second explosion-proof valve 30 facing outwardly. The second protective member 61b is further provided at the second engagement groove 13 corresponding to the first explosion-proof valve 20. The second protective member 61b covers a side of the first explosion-proof valve 20 facing outwardly. Therefore, the first protective member 61a can protect the second explosion-proof valve 30, and the second protective member 61b can protect the first explosion-proof valve 20. As a result, the reliability of the cell battery 100 is improved.

In some embodiments, the second explosion-proof valve 30 is connected at the first engagement groove 11 through welding. Therefore, the number of the opened explosion-proof valves can be selected according to the thermal runaway situation of the cell battery 100, thereby reducing the safety hazards when the cell battery 100 is thermally runaway.

In some embodiments, as illustrated in FIG. 1 to FIG. 15, the cell battery 100 is a cylindrical battery. The housing 10 is in a cylindrical shape. The first end cover 100a and the second end cover 100b are arranged at two axial ends of the housing 10, respectively. A gas in the cylindrical battery can be released from explosion-proof valves at two axial ends, thereby reducing a flow path required for gas release.

A battery pack is provided according to embodiments of the present invention. The battery pack includes the cell battery 100 according to any one of the above embodiments.

An electricity-consumption device is provided according to embodiments of the present invention. The electricity-consumption device includes the battery pack according to the above embodiments.

Other components and operations of the battery pack and the electricity-consumption device according to the embodiments of the present invention are known to those of ordinary skill in the art, and thus details thereof will be omitted here.

In the description of the present invention, it should be noted that, unless otherwise clearly stipulated and limited, terms such as "mount," "connect," and "connect to" should be understood in a broad sense. For example, it may be a fixed connection or a detachable connection or connection as one piece; mechanical connection or electrical connection; direct connection or indirect connection through an intermediate; or internal communication of two components. For those of ordinary skill in the art, specific meanings of the above-mentioned terms in the present invention can be understood according to specific circumstances.

Reference throughout this specification to terms such as "embodiments," "a specific example," and "examples," means that a particular feature, structure, material, or characteristic described in connection with the embodiment or example is included in at least one embodiment or example of the present invention. The appearances of the above phrases in various places throughout this specification are not necessarily referring to the same embodiment or example. In addition, the particular features, structures, materials, or characteristics described may be combined in any suitable manner in any one or more embodiments or examples.

Although embodiments of the present invention have been illustrated and described, it is conceivable for those of ordinary skill in the art that various changes, modifications, replacements, and variations can be made to these embodiments without departing from the principles and spirit of the present invention. The scope of the present invention shall be defined by the claims as appended and their equivalents.

## Claims

1. A cell battery, comprising:
a housing (10);
a first end cover (100a) provided at an end of the housing (10), the first end cover (100a) comprising a first base cover (1a) and a first explosion-proof valve (20) mounted at the first base cover (1a); and
a second end cover (100b) provided at the other end of the housing (10), the second end cover (100b) comprising a second base cover (1b) and a second explosion-proof valve (30) mounted at the second base cover (1b).

2. The cell battery according to claim 1, wherein:
the first end cover (100a) further comprises a first pole (20a) and a first current collector disk (30a), the first pole (20a) being mounted at the first base cover (1a), the first current collector disk (30a) being located at a side of the first base cover (1a) facing towards the housing (10) and being electrically connected to the first pole (20a), and the first base cover (1a) having an electrolyte injection hole (105); and
the second end cover (100b) further comprises a second pole (20b) and a second current collector disk (30b), the second pole (20b) being mounted at the second base cover (1b), and the second current collector disk (30b) being located at a side of the second base cover (1b) facing towards the housing (10) and being electrically connected to the second pole (20b).

3. The cell battery according to claim 1, wherein a projection of the first explosion-proof valve (20) in an axial direction of the cell battery at least partially overlaps with a projection of the second explosion-proof valve (30) in the axial direction of the cell battery.

4. The cell battery according to claim 3, wherein the projection of the first explosion-proof valve (20) in the axial direction of the cell battery completely overlaps with the projection of the second explosion-proof valve (30) in the axial direction of the cell battery.

5. The cell battery according to any one of claims 1 to 4, wherein:
the first base cover (1a) has a first exhaust channel (101a) and a first communication channel (103a), the first explosion-proof valve (20) being mounted at the first exhaust channel (101a), and the first exhaust channel (101a) being in communication with an external environment via the first communication channel (103a); and
the second base cover (1b) has a second exhaust channel (101b) and a second communication channel (103b), the second explosion-proof valve (30) being mounted at the second exhaust channel (101b), and the second exhaust channel (101b) being in communication with the external environment via the second communication channel (103b).

6. The cell battery according to claim 5, wherein:
the first base cover (1a) comprises a first insulation cover (51a) and a first base plate (10a) provided at a side of the first insulation cover (51a) away from the housing (10), and the first exhaust channel (101a) has a first through-hole (102a) and a first hollowed-out region (512a), the first base plate (10a) is provided with the first through-hole (102a) and the first communication channel (103a), the first hollowed-out region (512a) being located at the first insulation cover (51a), and the first explosion-proof valve (20) being mounted between the first base plate (10a) and the first insulation cover (51a); and
the second base cover (1b) comprises a second insulation cover (51b) and a second base plate (10b) provided at a side of the second insulation cover (51b) away from the housing (10), and the second exhaust channel (101b) has a second through-hole (102b) and a second hollowed-out region (512b), the second base plate (10b) is provided with the second through-hole (102b) and the second communication channel (103b), the second hollowed-out region (512b) being located at the second insulation cover (51b), and the second explosion-proof valve (30) being mounted between the second base plate (10b) and the second insulation cover (51b).

7. The cell battery according to claim 5 or 6, wherein:
the first end cover (100a) further comprises a first protective member (61a) mounted at the first exhaust channel (101a) and located downstream of the first explosion-proof valve (20) in an exhaust direction; and
the second end cover (100b) further comprises a second protective member (61b) mounted at the second exhaust channel (101b) and located downstream of the second explosion-proof valve (30) in the exhaust direction.

8. The cell battery according to claim 2, wherein:
the first current collector disk (30a) is located at a side of the first pole (20a) adjacent to the housing (10) and is laser-welded to the first pole (20a); and
the second current collector disk (30b) is located at a side of the second pole (20b) adjacent to the housing (10) and is laser-welded to the second pole (20b).

9. The cell battery according to claim 8, wherein:
the first current collector disk (30a) is in surface contact with the first pole (20a);
the second current collector disk (30b) is in surface contact with the second pole (20b); and
a laser welding path is in a continuous annular shape.

10. The cell battery according to claim 2, wherein:
the first base cover (1a) is provided with a first limiting rib (511a) on a surface of the first base cover (1a) facing towards the housing (10), the first limiting rib (511a) extending along an edge of the first current collector disk (30a) and being in clearance fit with the edge of the first current collector disk (30a); and
the second base cover (1b) is provided with a second limiting rib (511b) on a surface of the second base cover (1b) facing towards the housing (10), the second limiting rib (511b) extending along an edge of the second current collector disk (30b) and being in clearance fit with the edge of the second current collector disk (30b).

11. The cell battery according to claim 2, wherein:
the first pole (20a) is provided with a first outer protrusion (21a) on a circumferential surface of an end of the first pole (20a) facing towards the first current collector disk (30a), and the first end cover (100a) further comprises a first seal (40a), the first seal (40a) being sleeved on the first pole (20a) and abutting between the first outer protrusion (21a) and the first base cover (1a); and
the second pole (20b) is provided with a second outer protrusion (21b) on a circumferential surface of an end of the second pole (20b) facing towards the second current collector disk (30b), and the second end cover (100b) further comprises a second seal (40b), the second seal (40b) being sleeved on the second pole (20b) and abutting between the second outer protrusion (21b) and the second base cover (1b).

12. The cell battery according to claim 11, wherein:
the first end cover (100a) further comprises a first pressing block (70a) provided at a side of the first base cover (1a) away from the housing (10), the first pole (20a) rivets the first base cover (1a) and the first pressing block (70a) together; and
the second end cover (100b) further comprises a second pressing block (70b) provided at a side of the second base cover (1b) away from the housing (10), the second pole (20b) rivets the second base cover (1b) and the second pressing block (70b) together.

13. The cell battery according to claim 12, wherein:
the first end cover (100a) further comprises a first spacer (52a) provided between the first pressing block (70a) and the first base cover (1a); and
the second end cover (100b) further comprises a second spacer (52b) provided between the second pressing block (70b) and the second base cover (1b).

14. The cell battery according to claim 13, wherein:
one of the first pressing block (70a) and the first spacer (52a) has a first limiting recess (521a), and the other one of the first pressing block (70a) and the first spacer (52a) is provided with a first limiting protrusion (71a) engaged into the first limiting recess (521a), the first limiting protrusion (71a) having a non-circular cross-section perpendicular to an axis of the first pole (20a); and
one of the second pressing block (70b) and the second spacer (52b) has a second limiting recess (521b), and the other one of the second pressing block (70b) and the second spacer (52b) is provided with a second limiting protrusion (71b) engaged into the second limiting recess (521b), the second limiting protrusion (71b) having a non-circular cross-section perpendicular to an axis of the second pole (20b).

15. The cell battery according to claim 13 or 14, wherein:
one of the first base cover (1a) and the first spacer (52a) has a third limiting recess (104a), and the other one of the first base cover (1a) and the first spacer (52a) is provided with a third limiting protrusion (522a) engaged into the third limiting recess (104a), the third limiting protrusion (522a) having a non-circular cross-section perpendicular to an axis of the first pole (20a); and
one of the second base cover (1b) and the second spacer (52b) has a fourth limiting recess (104b), and the other one of the second base cover (1b) and the second spacer (52b) is provided with a fourth limiting protrusion (522b) engaged into the fourth limiting recess (104b), the fourth limiting protrusion (522b) having a non-circular cross-section perpendicular to an axis of the second pole (20b).

16. The cell battery according to any one of claims 1 to 15, wherein an opening pressure of the first explosion-proof valve (20) is unequal to an opening pressure of the second explosion-proof valve (30).

17. The cell battery according to claim 16, wherein a difference between the opening pressure of the first explosion-proof valve (20) and the opening pressure of the second explosion-proof valve (30) is greater than or equal to 0.1 MPa.

18. The cell battery according to claim 16 or 17, wherein:
the first explosion-proof valve (20) comprises a first body (21), the first body (21) having a first groove (211); and
the second explosion-proof valve (30) comprises a second body (31), the second body (31) having a second groove (311).

19. The cell battery according to claim 18, wherein the first groove (211) has a depth unequal to a depth of the second groove (311).

20. The cell battery according to claim 19, wherein:
the first body (21) and the second body (31) are each made of an aluminum sheet; and
a difference between the depth of the first groove (211) and the depth of the second groove (311) is greater than or equal to 90 micrometers.

21. The cell battery according to any one of claims 18 to 20, wherein:
the first groove (211) extends along a part of an edge of the first body (21);
the second groove (311) extends along a part of an edge of the second body (31); and
an area of the first body (21) is unequal to an area of the second body (31).

22. The cell battery according to claim 21, wherein:
the first body (21) comprises a first connection segment (212), two ends of the first connection segment (212) being connected to two ends of the first groove (211), respectively, and a first opening region (213) being enclosed by the first connection segment (212) and the first groove (211); and
the second body (31) comprises a second connection segment (312), two ends of the second connection segment (312) being connected to two ends of the second groove (311), respectively, and a second opening region (313) being enclosed by the second connection segment (312) and the second groove (311).

23. The cell battery according to any one of claims 18 to 22, wherein at least one of the first body (21) and the second body (31) is provided with a connection portion (22) at an edge of the at least one of the first body (21) and the second body (31), wherein:
when the first explosion-proof valve (20) is provided with the connection portion (22), the connection portion (22) is in an annular shape and extends along an edge of the first body (21), the first body (21) having a smaller thickness than the connection portion (22), and the first groove (211) being formed at a connection between the first body (21) and the connection portion (22); and
when the second explosion-proof valve (30) is provided with the connection portion (22), the connection portion (22) is in an annular shape and extends along an edge of the second body (31), the second body (31) having a smaller thickness than the connection portion (22), and the second groove (311) being formed at a connection between the second body (31) and the connection portion (22).

24. The cell battery according to claim 1, wherein the second base cover (1b) has a first engagement groove (11), the second explosion-proof valve (30) being connected at the first engagement groove (11).

25. The cell battery according to claim 24, wherein the first base cover (1a) has a third groove (214) extending in an arc shape, the first explosion-proof valve (20) being formed by the third groove (214) and a region enclosed by the third groove (214).

26. The cell battery according to claim 24 or 25, wherein the second explosion-proof valve (30) is connected at the first engagement groove (11) through welding.

27. The cell battery according to claim 1, wherein:
the cell battery is a cylindrical battery;
the housing (10) is in a cylindrical shape; and
the first end cover (100a) and the second end cover (100b) are arranged at two axial ends of the housing (10), respectively.

28. A battery pack, comprising the cell battery according to any one of claims 1 to 27.

29. An electricity-consumption device, comprising the battery pack according to claim 28.
